# EUROPEAN PATENT SPECIFICATION

(11) **EP 2 172 398 B1**
(45) Date of publication and mention of the grant of the patent: **18.07.2012**
(21) Application number: 09012446.2
(22) Date of filing: 01.10.2009
(51) Int. Cl.: B65B 35/26, B65B 35/50, B65G 59/06, B65G 57/32

(54) **Device for stacking a plurality of disc-shaped products**
Vorrichtung zum Stapeln mehrerer plattenförmiger Produkte
Dispositif d'empilement de plusieurs produits en forme de disque

(30) Priority: 02.10.2008 NL 1036007
(43) Date of publication of application: 07.04.2010
(73) Proprietor: B.V. Machinefabriek Houdijk, 3133 KS Vlaardingen (NL)
(72) Inventor: De Jong, Henricus Nicolaas Johannes, 2625 LD Delft (NL)
(74) Representative: Baeten, Ernest

(56) References cited:
- EP-A- 0 049 923
- EP-B- 0 868 349
- GB-A- 2 216 508
- US-A- 4 257 532

## Description

The present invention relates to a device for stacking disc-shaped products according to the preamble of claim 1.

Such a device is known from EP-A-868349. In said known device, wheels are provided on either side of the discharge conveyor at each magazine, on which wheels the products in a magazine are supported. While products are being supplied from a magazine to the discharge conveyor, the wheels are in principle statically positioned under the magazine. When the number of products to be taken from the magazine in question is to be changed, the wheels are driven synchronously in opposite directions for adjusting the height of the supporting surface of the products relative to the discharge conveyor and catch elements moving therealong. The height of the supporting surface determines the number of products to be removed by a passing catch element. The higher the supporting surface, the lower the number of products that will be removed. The wheel is not rotated as long as the number of products to be removed by successive catch elements remains unchanged.

A single product as well as a stack of products may be concerned. For the sake of simplicity, mention will consistently be made of a single product hereinafter, with the understanding that a "product" may consist of a few already stacked-together products.

The products positioned above the product being removed are received on the supporting surface provided by the wheels, so that another product can be released during a next cycle. This takes place in that the product positioned above the discharged product in the magazine drops onto the wheels, being additionally loaded by the weight of the products positioned thereabove in the magazine.

In the known device, the wheels comprise higher and lower segments, which are connected by screw-like members. Upon rotation of the opposing wheels, a product drops onto a higher or a lower part of the wheels.

A product that has dropped onto the lower segment is carried off by a catch element. To that end an opening is provided between the two adjacent wheels at the place where a dropped product is located, through which opening the catch elements extend. The catch elements are connected to an endless chain, which is disposed under the discharge conveyor for the products, which discharge conveyor is provided with a longitudinal slot, through which the catch elements can extend.

Since two wheels are provided at each magazine, which wheels must moreover be driven synchronously, the device is complex and takes up a great deal of space. This makes it difficult to clean the device and correct any malfunctions.

Furthermore, a product must be moved out from under an overlying product by means of a catch element, whereupon the overlying product will drop onto the wheels. Moreover, a moving catch element will bump against a product which has been released by the wheels, but which is still stationary. This may easily lead to damage to a product, such as breakage thereof. There is also a risk of damage when a product drops from a higher location onto the lower location.

The object of the invention is to eliminate these drawbacks by providing a device which reduces the risk of damage to products. This object is accomplished by the present invention by providing a device as defined in claim 1.

In this way it is achieved that a product is moved clear of the overlying products by the wheel in question and that a certain velocity is imparted to the product in the conveying direction before the product is engaged by a catch element. Thus the product already has a certain velocity before it comes into contact with a catch element, so that there will be a smaller risk of the product being damaged when a catch element comes into contact with a the product. It is also possible to increase the velocity of the catch elements without this leading to an increased risk of breakage in comparison with the known device.

Since the impact with which a catch element makes contact with a product is smaller than in the known device, the system by which the catch elements are moved will also be loaded less heavily, i.e. be less liable to wear.

From US 4,257,532 there is known a device for moving lids in the form of a plate-shaped surface provided with a recess in the engaging edge for engaging the edge of a container. The device comprises three arms, which pivot about an axis and which are provided with upstanding legs which engage in the recess of a lid. Said device is arranged for handling lids and is not suitable for disc-shaped products, which do not have such a recess.

From GB 2 216 508 there is known a device wherein planar articles are removed from the bottom of a stack by means of a wheel rotating about a horizontal axis.

Since a wheel effects the movement of a product from a magazine to the conveying element, one wheel is preferably provided at a magazine, which wheel, upon rotation thereof, moves a product from the magazine in question to the discharge conveyor. One wheel will suffice for conveying the product and imparting the velocity thereto.

It is preferable in that regard if a wheel is provided only on one side of the discharge conveyor at a magazine. The wheel can be maintained outside the path of the catch elements in that case, thus preventing the need for additional measures to enable the catch elements to pass the wheel. The conveying element can transport the product from the wheel to the position where it is to be engaged by the catch elements, or at least provide a path along which the product moves.

To obtain the most advantageous effect of the wheel in removing a product, the wheel will in particular be circumferentially provided with wedge-shaped surfaces and with cams disposed between the successive surfaces.

In this way it is achieved that a product is supported during the entire movement of the wheel to the lower discharge location of the product, thus preventing the products from making a falling movement, so that the risk of breakage of the product is considerably reduced.

More particularly, also the angle which the central axis of the magazine, and also of the wheel, includes with the conveying direction of the discharge conveyor will preferably be slightly smaller than 90°, said central axis lying in a plane which extends vertically to the discharge conveyor, through the longitudinal axis thereof. As a result, a product is transported perpendicularly to the central axis of the magazine and the wheel from a magazine to the conveying element.

Depending on the embodiment of the device and the placement of each of the respective conveying elements, the latter may be provided with a slot over at least part of their length for allowing the catch elements to pass therethrough.

In a preferred embodiment of the device according to the invention, the discharge conveyor will slope downwards in the conveying direction of the products, such that the conveying elements will be positioned at the same level relative to a horizontal plane at successive magazines, whilst the lower ends of the vertically oriented catch elements will move in a substantially horizontal plane.

As a result, the products can be discharged even more easily over the discharge conveyor, and the catch elements can make contact with the products in an advantageous manner as the height of the stacked products increases.

Since one side of a magazine will in any case be freely accessible, said side may be provided with a removable or pivotable flap so as to make it possible to gain access to the interior of the magazine in a relatively simple manner.

In this way any interruptions in the supply of products to the magazine or in the removal of products by the wheel can be eliminated in a simple manner. Such interruptions may for example result from breakage of a product.

The invention will now be explained in more detail on the basis of an embodiment as shown in the drawing, in which:
Figure 1 is a schematic side view, partially in sectional view, of a device according to the invention;
Figure 2 is a schematic top plan view of the device of figure 1;
Figure 3 is a schematic sectional view of the device along the line III-III in figure 2;
Figures 4A-F are perspective views of a wheel with a number of stacked products, in which the wheel and the lowermost product removed by the wheel are shown in successive positions during the transportation of the product over the static conveying element.

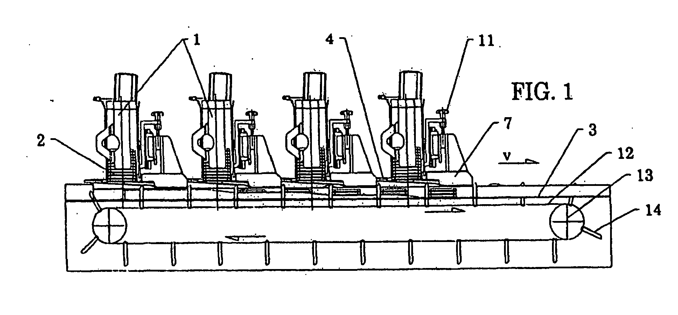

As shown in figures 1-3, the device according to the invention comprises a number of magazines 1 for holding products, which magazines contain disc-shaped products 2. The magazines 1 are arranged in succession in a conveying direction V above a substantially horizontal discharge conveyor 3.

Disposed beside and partially below each magazine 1 is a wheel 4, which is rotatable about a substantially vertical axis 5. As shown in figure 1, the axis 5 will be slightly inclined to the right.

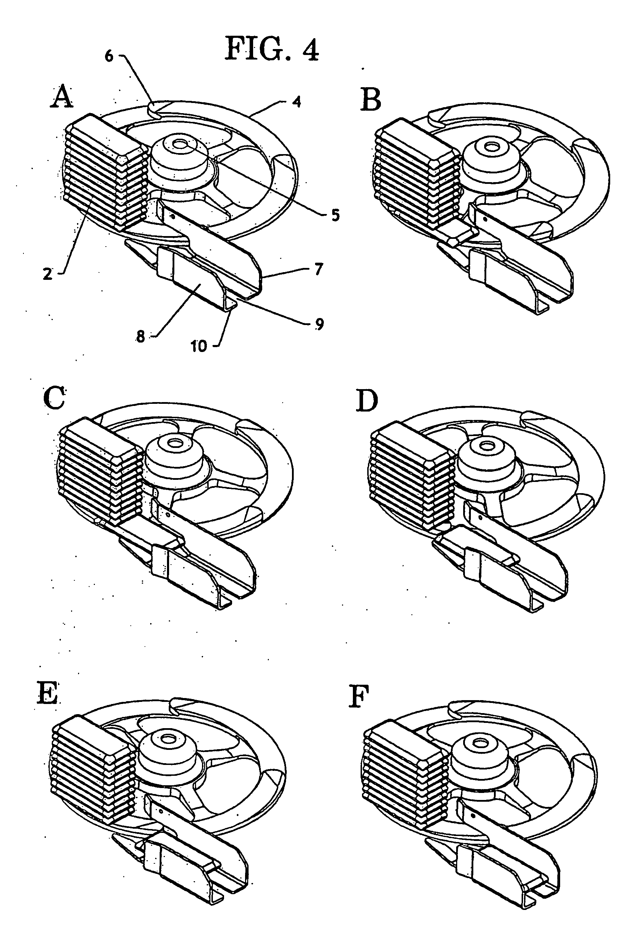

The view 4 is provided with cams 6 which, upon rotation of the wheel 4, push a product 2 from the magazine 1, so that the product will land on a downwardly sloping catch element 7, which is provided with guide means 8 and with a slot 9, as shown in particular in figure 4, whose purpose will be explained in more detail yet hereinafter.

As appears in particular from figure 1, the discharge conveyor 3 will be inclined in the conveying direction V of the products 2, such that the supporting strips 10 - see also figure 4 - of the successive conveying elements 7 will be disposed at the same height but spaced increasingly further above the discharge conveyor 3.

The difference in the spacing between the supporting strip 10 and the discharge conveyor 3 at two successive magazines 1 will be substantially equal to the thickness of a product 2, so that the products from successive magazines 1 can be stacked one on top of another.

The spacing between the aforesaid supporting strip 10 and the discharge conveyor 3 can be adjusted, if desired, by means of the rotatable adjusting knob 11, which is directly or indirectly connected to the conveying element 7, for example via the magazine 1, by means not shown.

Disposed under the discharge conveyor 3 is an endless chain 12, which passes over pulleys 13 and which is provided with catch elements 14. The catch elements 40 extend through a longitudinal slot 15 in the discharge conveyor and through the aforesaid slots 9 in the conveying elements 7.

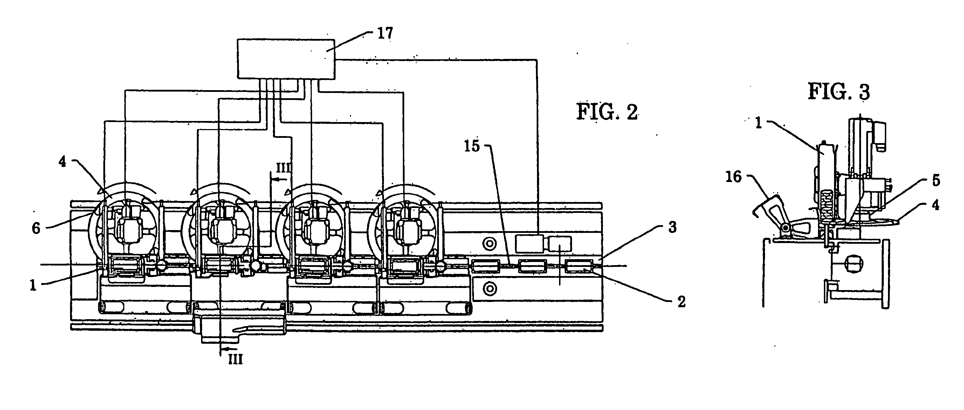

As appears in particular from figure 3, the magazine 1 is provided with a flap 16, which is shown in two positions in the figure. In one position, the wall of the magazine 1 is closed, and in the other position it is possible to gain access to the magazine, for example in case of an interruption in the supply or discharge of products 2.

Use can be made of electric wiring and switching devices connected to a control cabinet 17 for the rotation of the wheels 4 and the further control of the device.

It will be understood that only a few possible embodiments of a device according to the invention are shown in the drawing and described above, and that several modifications thereto are possible without departing from the inventive concept as defined in the claims.

## Claims

1. A device for stacking disc-shaped products (2), which device comprises a number of substantially vertical magazines (1) for holding the products (2), which magazines (1) are arranged in succession above a discharge conveyor (3), wherein wheels (4) are provided, which can be driven about a substantially vertical axis (5) for presenting a product (2) from a magazine (1) to moving catch elements (14) for transportation by said catch elements (14), wherein conveying elements (7) are provided with a supporting strip (10), which supporting strips are positioned at different heights relative to the discharge conveyor (3) at successive magazines (1), and wherein said conveying element (7) slope downwards in the conveying direction, **characterised in that** the Wheels are configured and disposed in such a manner that, in use of the device, a wheel (4), upon rotation thereof, removes a product (2) by pushing the product (2) from the associated magazine (1) at a certain velocity and transports it to the discharge conveyor (3) via a conveying element (7) provided with guide means (8).

2. A device according to claim 1, **characterised in that** one wheel is provided at a magazine, which wheel, upon rotation thereof, transports a product from the magazine in question to the discharge conveyor.

3. A device according to claim 1 or 2, **characterised in that** a wheel (4) is provided only on one side of the discharge conveyor (3) at a magazine.

4. A device according to any one of the preceding claims, **characterised in that** the wheel is circumferentially provided with wedge-shaped surfaces and with cams (6) disposed between the successive surfaces.

5. A device according to any one of the preceding claims, **characterised in that** the angle which the central axis of the magazine (1), and also of the wheel (4), includes with the conveying direction of the discharge conveyor (3) will be slightly smaller than 90°, said central axis lying in a plane which extends vertically to the discharge conveyor (3), through the longitudinal axis thereof.

6. A device according to any one of the preceding claims, **characterised in that** the conveying elements (7) are provided with a slot (9) over at least part of their length for allowing the catch elements (14) to pass therethrough.

7. A device according to any one of the preceding claims, **characterised in that** the discharge conveyor (3) slopes downwards in the conveying direction (V) of the products (2), such that the conveying elements (7) are positioned at the same level relative to a horizontal plane at successive magazines (1), whilst the lower ends of the vertically oriented catch elements (14) move in a substantially horizontal plane.

8. A device according to any one of the preceding claims, **characterised in that** one side of a magazine (1) is provided with a removable or pivotable flap (16) so as to provide access to the interior of the magazine.

## Patentansprüche

1. Vorrichtung zum Stapeln scheibenförmiger Produkte (2), die eine Anzahl von im Wesentlichen vertikalen Magazinen (1) zur Halterung der Produkte (2) aufweist, wobei die Magazine (1) aufeinanderfolgend oberhalb eines Abzugsförderers (3) angeordnet sind, wobei Räder (4) vorgesehen sind, die um eine im Wesentlichen vertikale Achse (5) zum Überreichen eines Produkts (2) aus einem Magazin (1) an bewegliche Mitnehmerelemente (14) für den Transport mittels dieser Mitnehmerelemente (14) angetrieben werden können, wobei Förderelemente (7) mit einer Stützleiste (10) versehen sind, wobei die Stützleisten relativ zu dem Abzugsförderer (3) in verschiedenen Höhen an aufeinanderfolgenden Magazinen (1) positioniert sind, und wobei sich die Förderelemente (7) in Förderrichtung nach unten neigen, **dadurch gekennzeichnet, dass** die Räder derart gestaltet und angeordnet sind, dass bei Benutzung der Vorrichtung ein Rad (4) bei seiner Drehung ein Produkt (2) mit einer bestimmten Geschwindigkeit durch Schieben des Produkts (2) aus dem zugehörigen Magazin (1) entfernt und es über ein mit Führungsmitteln (8) versehendes Förderelement (7) zu dem Abzugsförderer (3) transportiert.

2. Vorrichtung nach Anspruch 1, **dadurch gekennzeichnet, dass** ein Rad an einem Magazin vorgesehen ist, welches bei seiner Drehung ein Produkt aus dem betreffenden Magazin zu dem Abzugsförderer transportiert.

3. Vorrichtung nach Anspruch 1 oder 2, **dadurch gekennzeichnet, dass** ein Rad (4) nur an einer Seite des Abzugsförderers (3) an einem Magazin vorgesehen ist.

4. Vorrichtung nach einem der vorhergehenden Ansprüche, **dadurch gekennzeichnet, dass** das Rad umlaufend mit keilförmigen Oberflächen und mit zwischen den aufeinanderfolgenden Oberflächen angeordneten Nocken (6) versehen ist.

5. Vorrichtung nach einem der vorhergehenden Ansprüche, **dadurch gekennzeichnet, dass** der Winkel, welcher die in einer Ebene, die sich vertikal zu dem Abzugsförderer (3) durch dessen Längsachse erstreckt, liegende Mittelachse des Magazins (1) und auch des Rads (4) mit der Förderrichtung des Abzugsförderers (3) einschließt, etwas kleiner als 90° sein wird.

6. Vorrichtung nach einem der vorhergehenden Ansprüche, **dadurch gekennzeichnet, dass** die Förderelemente (7) mit einem Schlitz (9) über wenigstens einen Teil ihrer Länge versehen sind, damit die Mitnehmerelemente (14) durch sie hindurchtreten können.

7. Vorrichtung nach einem der vorhergehenden Ansprüche, **dadurch gekennzeichnet, dass** der Abzugsförderer (3) sich in Förderrichtung (V) der Produkte (2) derart abwärts neigt, dass die Förderelemente (7) an aufeinanderfolgenden Magazinen (1) auf demselben Niveau relativ zu einer horizontalen Ebene angeordnet sind, während die unteren Enden der vertikal ausgerichteten Mitnehmerelemente (14) sich in einer im Wesentlichen horizontalen Ebene bewegen.

8. Vorrichtung nach einem der vorhergehenden Ansprüche, **dadurch gekennzeichnet, dass** eine Seite eines Magazins (1) mit einer entfernbaren oder schwenkbaren Klappe (16) versehen ist, um einen Zugang zu dem Inneren des Magazins bereitzustellen.

## Revendications

1. Dispositif pour empiler des produits en forme de disque (2), lequel dispositif comprend un nombre de magasins sensiblement verticaux (1) pour retenir les produits (2), lesquels magasins (1) sont agencés en succession au-dessus d'un transporteur de décharge (3), dans lequel des roues (4) sont prévues, qui peuvent être entraînées autour d'un axe sensiblement vertical (5) pour présenter un produit (2) à partir d'un magasin (1) à des éléments de collecte mobiles (14) pour le transport par lesdits éléments de collecte (14), dans lequel des éléments de transport (7) sont pourvus d'une bande de support (10), lesquelles bandes de support sont positionnées à des hauteurs différentes par rapport au transporteur de décharge (3) au niveau de magasins successifs (1), et dans lequel lesdits éléments de transport (7) penchent vers le bas dans la direction de transport, **caractérisé en ce que** les roues sont configurées et disposées de manière telle que, durant l'utilisation du dispositif, une roue (4), lors de sa rotation, enlève un produit (2) en poussant le produit (2) à partir du magasin associé (1) à une certaine vitesse et le transporte jusqu'au transporteur de décharge (3) par l'intermédiaire d'un élément de transport (7) pourvu de moyens de guidage (8).

2. Dispositif selon la revendication 1, **caractérisé en ce qu'**une roue est prévue au niveau d'un magasin, laquelle roue, lors de sa rotation, transporte un produit du magasin en question au transporteur de décharge.

3. Dispositif selon la revendication 1 ou 2, **caractérisé en ce qu'**une roue (4) est prévue seulement sur un côté du transporteur de décharge (3) au niveau d'un magasin.

4. Dispositif selon une quelconque des revendications précédentes, **caractérisé en ce que** la roue est pourvue de façon circonférentielle de surfaces en forme de coin et de cames (6) disposées entre les surfaces successives.

5. Dispositif selon une quelconque des revendications précédentes, **caractérisé en ce que** l'angle que l'axe central du magasin (1), et également de la roue (4), comprend avec la direction de transport du transporteur de décharge (3) sera légèrement inférieur à 90°, ledit axe central se trouvant dans un plan qui s'étend verticalement au transporteur de décharge (3), à travers son axe longitudinal.

6. Dispositif selon une quelconque des revendications précédentes, **caractérisé en ce que** les éléments de transport (7) sont pourvus d'une fente (9) sur au moins une partie de leur longueur pour permettre aux éléments de collecte (14) de passer à travers.

7. Dispositif selon une quelconque des revendications précédentes, **caractérisé en ce que** le transporteur de décharge (3) penche vers le bas dans la direction de transport (V) des produits (2), de sorte que les éléments de transport (7) soient positionnés au même niveau par rapport à un plan horizontal au niveau de magasins successifs (1), alors que les extrémités inférieures des éléments de collecte orientés verticalement (14) se déplacent dans un plan sensiblement horizontal.

8. Dispositif selon une quelconque des revendications précédentes, **caractérisé en ce qu'**un côté d'un magasin (1) est pourvu d'un volet amovible ou pivotant (16) afin de fournir un accès à l'intérieur du magasin.
